(19) Europäisches Patentamt
European Patent Office
Office européen des brevets

(11) **EP 2 728 329 A1**

(12) **EUROPEAN PATENT APPLICATION**

(43) Date of publication:
**07.05.2014 Bulletin 2014/19**

(51) Int Cl.:
***G01L 1/22*** *(2006.01)*   ***G01L 5/10*** *(2006.01)*

(21) Application number: **12382427.8**

(22) Date of filing: **05.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Evolo Evolving Mobility, S.L.**
**01510 Minano (Alava) (ES)**

(72) Inventors:
• **Fernández, Aitzol**
  **01510 MIÑANO (Alava) (ES)**

• **Lazarralde, Iban**
  **01510 MIÑANO (Alava) (ES)**
• **Argote, Joseba**
  **01510 MIÑANO (Alava) (ES)**
• **Diaz Lecumberri, Luis**
  **01510 MIÑANO (Alava) (ES)**

(74) Representative: **Carpintero Lopez, Francisco et al**
**Herrero & Asociados, S.L.**
**Alcalá 35**
**28014 Madrid (ES)**

(54) **Measuring device and method for measuring stress in a transmission system**

(57)     The present invention relates to a measuring device for measuring stress in a transmission system and to a method associated with same; where said transmission system comprises a first axle (1) and a second axle (4) linked to one another through a transmission element (5); and where the measuring device comprises: a static measurement axle (2), where said static measurement axle (2) is coupled to the transmission element (5), and where said static axle (2) comprises at least one sensor configured for measuring the stress which the transmission element (5) applies on said static measurement axle (2); a movable pre-tensing axle (3) which is in contact with the transmission element (5); and where said movable axle (3) is configured to be able to move between at least two positions causing an increase or a decrease in the tension of said transmission element (5); and a data acquisition system (6) linked to the static measurement axle (2); and where said data acquisition system (6) is configured for taking data of the stress measured in the static measurement axle (2); giving rise to a device with a very simple and effective configuration; obtaining a series of highly accurate results.

FIG. 1

**Description**

Object of the Invention

The present invention relates to a measuring device for measuring stress in a transmission system where the transmission system is preferably operated by a user, such as the transmission system of a bicycle or of a piece of gymnasium equipment, for example; it further relates to a specific method associated with the device object of the invention and is encompassed in the field of mechanical measuring systems.

The purpose of this device is to measure the stress exerted on a transmission system to be able to be identified and used for various purposes, such as for example, for the graphical analysis of the force applied by a user when pedaling a bicycle or for motorized assistance depending on the measurement data taken; where the device is formed by a series of simple elements perfectly coupled to one another, successfully obtaining highly accurate stress results which are suitable for conducting graphical energy and power studies.

Background of the Invention

By way of introduction, various transmission systems used in sports equipment such as bicycles, tricycles, quadricycles, elliptical trainers, etc., are known. In all this equipment, the user is the one who has to exert a mechanical force to enable movement and such transmission systems are usually formed mainly by an input axle and an output axle. This can be seen for example in a bicycle where the input axle is in the axle coupled to the bottom bracket and the output axle is located in the rear wheel through various secondary chain wheels modifying the radial velocity of said rear wheel.

For all the preceding transmission systems and preferably in gymnasium systems such as stationary bicycles, elliptical trainers, etc., the force applied by the user to enable moving the output axle which, in gymnasium systems, tends to be a flywheel which can even be coupled to an alternator for generating electric energy, is to be known. To that end there are different solutions belonging to the state of the art, such as for example:

- Spanish patent application number ES-1022960; which describes a pedal for bicycles that allows measuring the forces applied by a user when pedaling; to that end it comprises an axle contacting perpendicularly with the connecting rod, where said axle deforms with the bottom bracket itself when the user starts the movement, and said axle deformation is measured by a series of strain gauges (Wheatstone bridges) located in said axle of the pedal.
- Spanish patent application number ES-2279773; which describes a system for measuring a force exerted by a cyclist; said application is the same as the one described above, but in this case stress is measured on the axle in which the drive wheel of the bicycle is assembled; measuring the bending of the axle by means of sensor systems similar to the preceding application.
- European patent application which is translated into Spanish patent number ES-2348493; which describes a method and device for measuring bicycle chain force; to that end it indicates that the measuring system is in the chain of the bicycle itself through the deformation of a elastically deformable transition part, where said transition part is between an axle and the frame of the bicycle; and where a chain force sensor is capable of providing a measuring signal indicative of the displacement between the frame, the axle and the deformation of said transition axle.

All these partially solve the problem described above, successfully obtaining a series of results for the force applied by the user in moving the equipment; however all these, both the measuring device and the method for calculating said results, involve the presence of elements directly interfering with the transmission system, such that they are rotary and structural elements generating measurement deviations mainly caused by undesired movements or forces and supported by such measuring elements; giving inaccurate results directly affecting the subsequent actions to be performed, since they need the results obtained from the measuring systems as data inputs.

Therefore, in view of the mentioned prior arts and the drawbacks of the measuring devices for measuring stress mentioned above, there is a need for a new measuring device which allows obtaining results for the forces applied by a user in a specific transmission system, where such results are highly accurate for use in other applications such as for making stress graphs, motorized user help systems, etc.; and where the device is additionally made with simple, easy to maintain elements and is associated with a method described through a series of flexible sequential steps useful for the user.

Description of the Invention

The present invention relates to a measuring device for measuring stress in a transmission system, for example, the transmission system of a bicycle, tricycle, quadricycle, or of a piece of gymnasium equipment such as an elliptical trainer, stationary bicycle, rowing machine, etc.; where the transmission system comprises:

- a first axle which is preferably operated mechanically by a user such as in the example of a bicycle where the first axle corresponds to the bottom bracket;
- a second axle which is preferably the output axle and in the example of a bicycle, it corresponds to the rear wheel like a propulsion vehicle; and
- a transmission element responsible for linking the first axle with the second axle; where said transmission element can be a link chain, a cogged belt, a band, etc.

It must be clarified that even though a first axle and a second axle are present, there is a possibility that there are intermediate axles responsible for varying the exit velocities of the second axle, and for simplicity the description is thus reduced to the presence of two axles and the transmission element since this is the simplest configuration which can be found in the state of the art.

Once the transmission system is described, the remaining elements comprised in the measuring device for measuring stress object of study can then be described, the elements being:

- a static measurement axle which is not coupled to the transmission element. Said static axle comprises at least one sensor configured for measuring the stress which the transmission element applies on said static measurement axle; clarifying the term static as a fixed, stationary axle, not a rotary or a structural axle.
- a movable pre-tensing axle which is in contact with the transmission element; and where said movable axle is configured to be able to move between at least two positions causing an increase or a decrease in the tension of said transmission element; said movable axle can move due to this, and is always in contact with the transmission element, such that it is capable of preloading it with a specific tension or unloading a specific tension from it, since by considering the transmission element as a flexible element, the latter deforms increasing its tensional state, which is transmitted to the static measurement axle.
- a data acquisition system linked to the static measurement axle; and where said data acquisition system is configured for taking data of the stress measured in the static measurement axle; i.e., the data acquisition system is responsible for collecting all the data computed in said at least one sensor of the static measurement axle in order to be able to obtain data outputs such as stress and time graphs, and even to compute algorithms prepared so that, once a specific stress is reached, a series of auxiliary elements interact with the user in a way which will be explained below in the present specification.

It is observed that unlike the previously shown device, the measuring device comprises three essential elements:

- the static measurement axle which does not interfere with the movement of the transmission element and therefore does not falsify the results of the force applied by the user.
- the movable pre-tensing axle can not only be used to pre-tense the transmission element, but can be additionally used to adjust the tension of the transmission element to its set point tension to enable calibrating the stress values of the static measurement axle, since in the devices of the state of the art, the pre-tensing set point is provided during device manufacture, and therefore in the event of temperature changes or repeated use causing whole assembly dilations, the initial set point will vary and will not be considered valid. In contrast, with the movable axle of the device object of the invention, the whole device can be calibrated at the start of each activity.
- The data acquisition system which is responsible for interpreting the data collected in the static measurement axle as well as in the set point introduced in the movable pre-tensing axle; giving rise to a synergic interaction of said essential elements.

In this sense a method for measuring stress in the transmission system is described according to the device described above, where said method comprises the following steps:

a) pre-tensing the transmission element by means of moving the movable pre-tensing axle in contact with said transmission element, where the movable pre-tensing axle is moved to obtain an initial set point and the objective of which is to recalibrate the entire system, when necessary.
As mentioned above, in the preceding devices, the tension reference value with which the tension generated by the action of the user will be compared is predetermined during manufacture and does not contemplate possible dimension variations of the components of the measuring system, such as temperature changes, supported stresses, deformations suffered, etc., causing the set point value predetermined during manufacture to not be the true value and therefore the stress measurement is inaccurate.
b) measuring the stress which the transmission element applies on the static measurement axle since the transmission element is tensed and said tension is directly transmitted to the static measurement axle through said at least one sensor of the static measurement axle.

c) taking the stress data recorded in the static measurement axle through the data acquisition system, where the data collection is used both for quantifying the abovementioned set point and for managing this data and transforming it by means of predetermined algorithms, offering information to the user through graph, sound, etc., such that it offers an actual value of the energy used by the user.

In relation to the stress measurement by the static measurement axle, the possibility that said static measurement axle comprises a rolling element configured to roll freely with respect to the static measurement axle; and where the outer surface of the rolling element is in contact with the transmission element, is contemplated. In other words, the static axle itself comprises a rolling element which is in contact with the transmission element where, for example, said rolling element is an annular element in the empty interior of which the static measurement axle is coupled, and it is in that static axle where at least one measurement sensor responsible for collecting the stress applied by the transmission element is located, which sensors are next to the measuring axle and it is also possible for them to be at the height of the rolling element.

Additionally the possibility that the static measurement axle comprises a plurality of strain gauges acting by way of said at least one measurement sensor is contemplated, where preferably the strain gauges are arranged by way of Wheatstone bridge where said gauges measure the deformation of the static measurement axle through the piezo-resistive effect.

For clarification, piezo-resistive effect is the property of certain materials to change their nominal resistance value when they are subjected to certain mechanical stresses; such that a stress which causes a gauge deformation generating a variation in the electrical resistance of said gauge; and therefore, the magnitude of the stress applied on the static measurement axle is deduced by measuring the electrical resistance of the gauge. It must be taken into account that, depending on the arrangement of the gauges for the deformation of the Wheatstone bridge, tension values for different stresses in the static measurement axle, such as shear stress, bending stress, twisting stress, etc., can be obtained.

Additionally, resistance is converted into absolute voltage (a value the units of which are millivolts) by means of the Wheatstone bridge and by complying with Hooke's law, the deformation and absolute voltage are linearly related depending on the material used for manufacturing the static measurement axle as well as the type of selected strain gauge.

The tension value (in Newtons according to the International System of Units) is an analogue value, therefore the user can know said stress at all times.

The possibility that the measuring device for measuring stress object of the invention comprises a viewing system for a user to view the data collected in the data acquisition system is contemplated. So continuing with the preceding preferred description, once the analogue value of the tension supported by the static measurement axle is known, the data acquisition system is responsible for offering the values of power and energy used derived directly from the exercise performed by said user to the user.

For clarification, a possible algorithm for calculating the results to be provided to the user by the measuring device object of the invention is then described, where the velocity of the transmission element must first be known. To that end the possibility that the measuring device comprises an element for measuring the angular velocity of a rolling element is contemplated; such that by knowing the angular velocity ($\square$) and a radius (R) of any first axle, second axle or an auxiliary rolling element, the velocity (v) and the tension (T) of said transmission element is known; and therefore, the power generated by the user is known at all times:

$$\text{Power} = \text{Tension} \times \text{Velocity [Watts]}$$

Therefore, the data acquisition system is responsible for showing an analogue value of the power generated by the user by means of compiling said preestablished algorithm. Furthermore, the possibility that the data acquisition system is configured for calculating the tension values depending on time, generating at least one graph to be viewed in a user viewing system is contemplated in step c), therefore offering an accumulated value of the energy used by the user at all times: $E(t) = \int_0^t Power\,dt\, [Joules][Calories]$

Finally, in view of the technical features described, various possibilities for applying the device of the invention object of study where the measuring device for measuring stress in a transmission system preferably comprises a motorized system coupled to the transmission element and said motorized system configured for aiding the movement of said transmission element, are contemplated, where said set of elements can be simplified into a pedaling assistance device on a bicycle, for example, such that at the time in which the user starts pedaling, the measuring device offers the values of instantaneous power and energy used to the user, and depending on his/her needs, the user can demand an assistance value proportional to the force applied from the device with the aid of the motorized system.

Therefore, according to the invention described, the measuring device for measuring stress in a transmission system object of the invention constitutes an important novelty in measuring devices for measuring stress of the state of the art, giving rise to a series of highly accurate results which can be used as merely informative results or which are associated with auxiliary devices aiding movement. Additionally, calibration options are shown every time the machine where said measuring system is located is started up, assuring a correct and accurate operation and display of said results. Furthermore, such device can be implemented in various everyday objects such as bicycles, gymnasium equipment, tricycles, quadricycles, and even motorized systems such as electric bicycles, motorcycles, etc. All this is done with a device having a very simple, effective and valid configuration with respect to results.

Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:

Figure 1 shows a schematic view of the measuring device for measuring stress object of the invention in its basic configuration with a first and second axle.

Figure 2 shows a three-dimensional schematic view of a preferred embodiment of the static measurement axle which comprises an annular rolling element with respect to said static axle.

Figure 3 shows an example of a graph of the stress which can be obtained by the acquisition system with the power and time variables.

Figure 4 shows a three-dimensional schematic view of the measuring device for measuring stress object of the invention where the static measurement axle comprises the rolling element shown in Figure 2.

Preferred Embodiment of the Invention

In view of the drawings, different possibilities of embodiment can be seen for the measuring device for measuring stress in a transmission system object of study and method associated with same where the device preferably comprises the following elements:

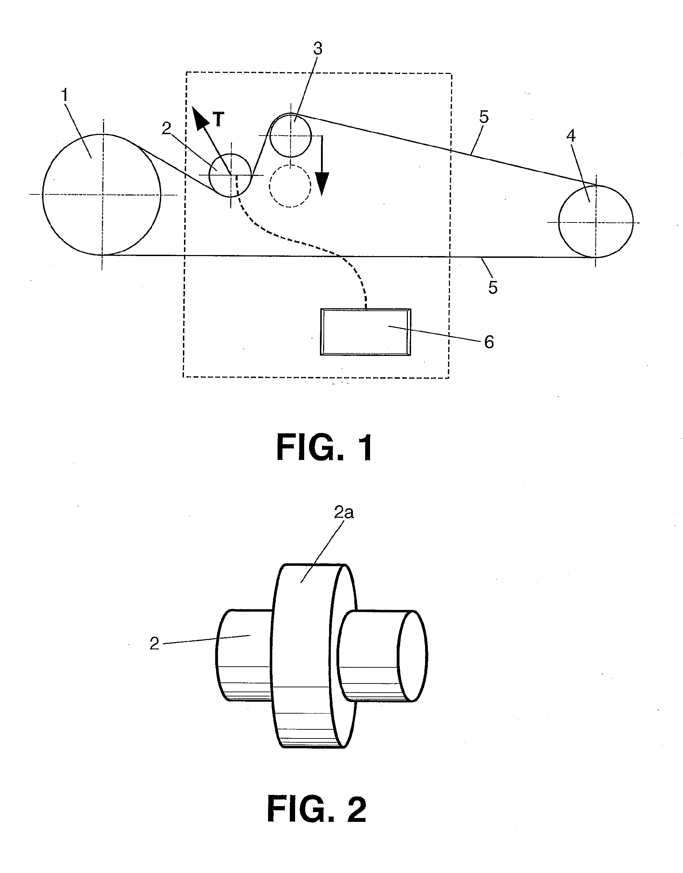

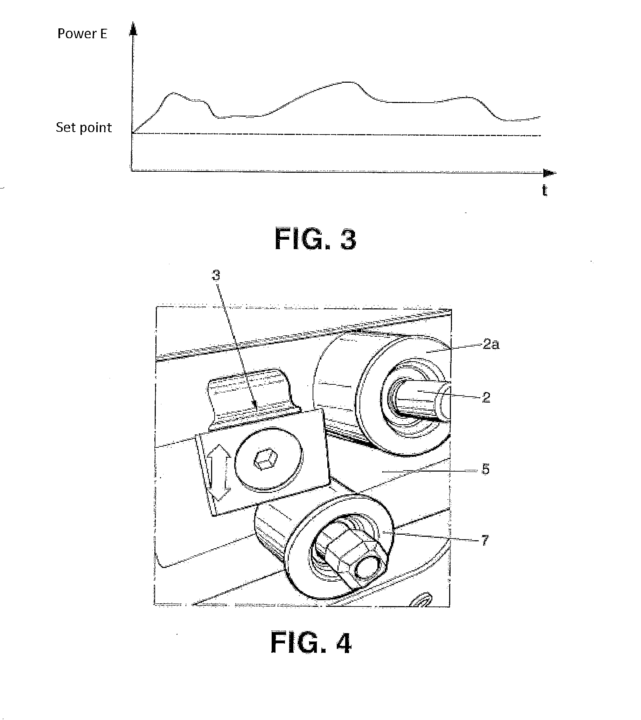

- the transmission system comprises a first axle (1) which is a first pulley and a second axle (4) which is a second pulley linked to one another through a flexible transmission element (5) such as a chain, a belt, a band, etc.
- a static measurement axle (2) comprising an annular rolling element (2a) configured to roll freely with respect to the static measurement axle (2); where the outer surface of the rolling element (2a) is in contact with the transmission element (5); such that the static axle (2) comprises a series of strain gauges configured for measuring the stress which the transmission element (5) applies on said static measurement axle (2) through the rolling element (2a) shown in Figures 2 and 4.
- a movable pre-tensing axle (3) which is in contact with the transmission element (5); and where said movable axle (3) is configured to be able to move between two positions causing an increase or a decrease in the tension of said transmission element (5), where the transmission element (5) is tensed in one direction, and the transmission element (5) is loosened in the opposite direction, as can be seen in Figures 1 and 4.
- a data acquisition system (6) linked to the static measurement axle (2); and where said data acquisition system (6) is configured for taking stress data measured in the static measurement axle (2); in addition to allowing the calibration of the stress in said measuring device (2) as a result of the pre-tensing of said transmission element (5) through the movement of the movable axle (3).
- a user viewing system for a user to view the data collected in the data acquisition system (6), showing a series of graphs and limiting values serving as a reference so that the user can quantify the force being applied.

Furthermore, associated with all the preceding elements of the measuring device for measuring stress in a transmission system, a series of steps describing the associated method is described, the steps being:

a) pre-tensing the transmission element (5) by means of moving the movable pre-tensing axle (3) in contact with said transmission element (5).

b) measuring the stress which the transmission element (5) applies on the static measurement axle (2) through its strain gauges, and as a result of the free rolling of the rolling element (2a) which is in contact with the transmission element (5).

c) taking the data of the stress recorded in the static measurement axle (2) through the data acquisition system (6).

d) calculating the tension value depending on time, generating a plurality of graphs to be viewed in a user viewing system, providing an analogue value, through which it is possible to measure the stress at all times and analyze its progress over time.

e) recalibrating the entire system quickly, simply and efficiently. All this allows offering different preferred embodiments depending on the location of the measuring device object of the invention, the following stands out:

1. Pedaling assistance proportional to the force applied by the user: a bicycle or similar pedal-powered vehicle is used as the transmission system; where the first axle (1) is the bottom bracket, the second axle (4) is the rear wheel, and the transmission element (5) is the chain. When the user starts pedaling, the measuring device starts to measure the data of the force applied by the user, and the data acquisition system (6) offers the values of instantaneous power and energy used to the user. Furthermore, depending on his/her needs, the user can preferably request an assistance value proportional to the force applied from the system as a result, for example, of a motorized system coupled to the transmission element (5), for example an electric motorized system and a system which recharges the pedal-driven vehicle when braking.

2. Movement resistance proportional to the demand required by a user in gymnasium equipment like stationary bicycles, elliptical trainers or the like: Since gymnasium equipment is based on a two-axle transmission system; where the first axle (1) is usually a bottom bracket, the second axle (4) a flywheel, and the transmission element (5) a cogged belt; both the static measurement axle (2) and the movable axle (3) are located internally with respect to the framework of said gymnasium equipment. Furthermore, when the user starts exercising, the measuring device starts to measure the data of the force applied by the user, and the data acquisition system (6) again offers the values of instantaneous power and energy used; such that the user can visually see the progress of the exercise performed.

3. Optimizing the process of operating the transmission system: the use of the device object of the invention is contemplated in places intended for user rehabilitation since it allows the user to differentiate the force applied by each limb (arms, legs) of a user independently; and providing an analogue value which can link every point of the graphs obtained with a specific position of the static measurement axle (2); knowing the most efficient times of the exercise and those that can be improved.

Finally, a preferred embodiment for viewing the graph of stress and tension shown in Figure 3 which has a minimum threshold value called a set point and which must be calibrated and measured as a result of the movable axle (3) of the device object of the invention, must be highlighted.

In view of this description and set of drawings, the person skilled in the art will understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

**Claims**

1. Measuring device for measuring stress in a transmission system, where said transmission system comprises a first axle (1) and a second axle (4) linked to one another through a transmission element (5); and where the measuring device for measuring stress is **characterized in that** it comprises:

- a static measurement axle (2), where said static measurement axle (2) is coupled to the transmission element (5), and where said static axle (2) comprises at least one sensor configured for measuring the stress which the transmission element (5) applies on said static measurement axle (2);
- a movable pre-tensing axle (3) which is in contact with the transmission element (5); and where said movable axle (3) is configured to be able to move between at least two positions causing an increase or a decrease in the tension of said transmission element (5); and
- a data acquisition system (6) linked to the static measurement axle (2); and where said data acquisition system (6) is configured for taking data of the stress measured in the static measurement axle (2).

2. Measuring device for measuring stress in a transmission system according to claim 1, **characterized in that** the static measurement axle (2) comprises a rolling element (2a) configured to roll freely with respect to the static measurement axle (2); and where the outer surface of the rolling element (2a) is in contact with the transmission element (5).

3. Measuring device for measuring stress in a transmission system according to any of the preceding claims, **characterized in that** it comprises a user viewing system for a user to view the data collected in the data acquisition system (6).

4. Measuring device for measuring stress in a transmission system according to any of the preceding claims, **characterized in that** it comprises a motorized system configured for aiding the movement of said transmission system (5).

5. Measuring device for measuring stress in a transmission system according to any of the preceding claims, **characterized in that** the static measurement axle (2) is fixed and comprises a plurality of strain gauges.

6. Measuring device for measuring stress in a transmission system according to any of the preceding claims, **characterized in that** the movable pre-tensing axle (3) comprises a movable pulley configured to be moved in any direction.

7. Measuring device for measuring stress in a transmission system according to any of the preceding claims, **characterized in that** it comprises an element for measuring the angular velocity in any of the axles.

8. Method for measuring stress in a transmission system according to the device defined in any of the preceding claims, **characterized in that** it comprises the following steps:

   a) pre-tensing the transmission element (5) by means of moving the movable pre-tensing axle (3) in contact with said transmission element (5);
   b) measuring the stress which the transmission element (5) applies on the static measurement axle (2);
   c) taking the data of the stress recorded in the static measurement axle (2) through the data acquisition system (6).

9. Method for measuring stress in a transmission system according to claim 8, **characterized in that** in step a), any stress from pre-tensing the transmission element (5) is collected by the data acquisition system (6) allowing the calibration of the stress in said measuring device (2) for measuring stress.

10. Method for measuring stress in a transmission system according to any of claims 10 and 11, **characterized in that** in step c), the data acquisition system (6) is configured for calculating the power value depending on time, generating at least one graph to be viewed in a user viewing system.

# FIG. 1

# FIG. 2

Power E

Set point

t

FIG. 3

FIG. 4

EP 2 728 329 A1

**Europäisches Patentamt**
**European Patent Office**
**Office européen des brevets**

# EUROPEAN SEARCH REPORT

Application Number

EP 12 38 2427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 201374 A (TANITA SEISAKUSHO KK) 10 August 1993 (1993-08-10) | 1-3,5-10 | INV. G01L1/22 G01L5/10 |
| Y | * abstract * ----- | 4 | |
| X | CA 2 146 284 A1 (NEARY JOHN R [CA]) 5 October 1996 (1996-10-05) | 1-3,5-10 | |
| Y | * page 2, line 1 - page 3, line 16 * * page 6, line 1 - page 8, line 4 * * claims 1-4 * * figure 1 * ----- | 4 | |
| X | DE 43 36 507 A1 (HOFMANN MASCHINENBAU GMBH [DE]) 27 April 1995 (1995-04-27) * abstract * * the whole document * ----- | 1-10 | |
| A | JP 2005 280488 A (SHIRAI KENJI) 13 October 2005 (2005-10-13) * abstract * ----- | 1-10 | |
| A | DE 43 38 819 A1 (HEISS BENO [DE]; SCHLICHTING ROLAND [DE]) 24 May 1995 (1995-05-24) * figures 1,2 * ----- | 1-10 | TECHNICAL FIELDS SEARCHED (IPC) G01L |

The present search report has been drawn up for all claims

| Place of search | Date of completion of the search | Examiner |
|---|---|---|
| The Hague | 4 April 2013 | Daman, Marcel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

## ANNEX TO THE EUROPEAN SEARCH REPORT
## ON EUROPEAN PATENT APPLICATION NO.

EP 12 38 2427

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2013

| Patent document cited in search report | | Publication date | Patent family member(s) | Publication date |
|---|---|---|---|---|
| JP 5201374 | A | 10-08-1993 | ------------------------------------ | |
| CA 2146284 | A1 | 05-10-1996 | NONE | |
| DE 4336507 | A1 | 27-04-1995 | NONE | |
| JP 2005280488 | A | 13-10-2005 | NONE | |
| DE 4338819 | A1 | 24-05-1995 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 1022960
- ES 2279773
- ES 2348493